# EUROPEAN PATENT APPLICATION

(11) **EP 4 674 560 A1**
(43) Date of publication of application: **07.01.2026**
(21) Application number: 24771177.3
(22) Date of filing: 13.03.2024
(51) Int. Cl.: B23K 26/38, B23K 37/00, B23K 103/00

(54) **CUTTING DEVICE AND METHOD USING LASER**

(30) Priority: 16.03.2023 KR 20230034806
(71) Applicant: Iti Co., Ltd., Gyeonggi-do 14118 (KR)
(72) Inventor: LEE, Jung Joon, Seoul 03466 (KR)
(74) Representative: Vossius & Partner Patentanwälte Rechtsanwälte mbB
(86) International application number: PCT/KR2024/003197
(87) International publication number: WO 2024/191178

(57) **Abstract**

Disclosed are a cutting device and method using a laser, which comprises: a laser generation unit which generates a laser beam capable of penetrating the surface of a workpiece and is partially absorbed into the workpiece, a beam generation optical unit focuses the laser beam in a shape that is parallel to the surface of the workpiece and extends perpendicular to the processing direction, the workpiece is heated to a temperature that creates sufficient internal stress to separate the cut part from the workpiece while being below the melting point of the workpiece, the start point generation unit generates damage at the cutting start point outside the cutting surface to be cut in the workpiece, accordingly, the configuration enables a workpiece having thermal brittleness to be sliced to the desired thickness without melting the workpiece or causing significant damage.

## Description

### [Technical Field]

The present invention relates to a cutting device and method using laser, and more specifically, to a cutting device and method using laser, which cuts a workpiece having hot brittleness, such as glass or a ceramic ingot, through slicing by irradiating the workpiece with a laser beam.

### [Background Art]

A wafer slicing process is a process of making a silicon ingot formed in a block form into a form of a commonly used wafer.

The wafer slicing process includes an inner diamond (ID) sawing method, a wire sawing method, a laser cutting method, and the like.

For example, the following Patent Documents 1 and 2 disclose a configuration of a cutting method using a wire and a laser, respectively.

Meanwhile, in a process of cutting an object having hot brittleness, such as a wafer, ceramic, or glass, there is a problem in that a yield is low and a loss of workpiece, such as an ingot, is excessively generated due to a large number of defects caused by cracks and thermal damage.

In particular, the process of processing wafers in the ingot has problems in that workability is deteriorated and production efficiency is deteriorated in the process of performing a plurality of additional processes such as the ingot and wafer grinding process as well as the wafer cutting process.
(Patent Document 1) Korean Unexamined Patent Publication No. 10-2008-0001394 (published on January 03, 2008)
(Patent Document 2) Korean Patent Registration No. 10-2368338 (published on March 02, 2002)

### [Disclosure]

### [Technical Problem]

To solve the above problems, an object of the present invention is to provide a cutting device and method using laser, which may cut a workpiece having hot brittleness, such as glass, ceramic, or an ingot, with a desired thickness through slicing.

Another object of the present invention is to provide a cutting device and method using laser, which may cut a workpiece without melting or vaporizing the workpiece by irradiating the workpiece with a laser beam to heat and cool the workpiece at the same time.

### [Technical Solution]

To achieve the above objects, a cutting device using laser according to the present invention includes: a laser generation unit configured to generate a laser beam that is transmitted through a surface of a workpiece and partially absorbed into the workpiece; a beam generation optical unit configured to focus the laser beam in a shape, which is parallel to the surface of the workpiece and extends perpendicular to a cutting direction, with a depth at which the surface of the workpiece is to be cut such that the laser beam has a temperature below a melting point for preventing a cutting surface of the workpiece from being melted, and causing internal stress to separate a cut part from the workpiece; and a start point generation unit configured to generate damage to a cutting start point at a perimeter of the cutting surface that is to be cut from the workpiece. Accordingly, the workpiece is cut through slicing while reducing damage without melting the workpiece.

In addition, to achieve the above objects, a cutting method using laser according to the present invention includes: (a) generating, by a laser generation unit, a laser beam that is transmitted through a surface of a workpiece and partially absorbed into the workpiece; (b) generating damage to a cutting start point at a perimeter of a cutting surface that is to be cut from the workpiece by using a start point generation unit; and (c) focusing and irradiating, by a beam generation optical unit, the laser beam in a shape, which is parallel to the surface of the workpiece and extends perpendicular to a cutting direction, with a depth at which the surface of the workpiece is to be cut such that the laser beam has a temperature below a melting point for preventing a cutting surface of the workpiece from being melted, and causing internal stress to separate a cut part from the workpiece. Accordingly, the workpiece is cut through slicing while reducing damage without melting the workpiece.

### [Advantageous Effects]

As described above, according to the cutting device and method using laser according to the present invention, it is possible to cut the workpiece having hot brittleness with a desired thickness through slicing.

In addition, according to the present invention, it is possible to cut the workpiece while minimizing damage without melting or vaporizing the workpiece by irradiating the workpiece with a laser beam to heat and cool the workpiece at the same time.

In addition, according to the present invention, it is possible to easily separate a cut part that is cut from the workpiece using a separation unit, and to improve flatness of a cutting surface.

Accordingly, according to the present invention, it is possible to improve workability of a cutting operation of the cut part on the workpiece, and to maximize productivity by removing or minimizing post-processing of the cut part, for example, a polishing process performed during wafer manufacturing.

### [Description of Drawings]

FIG. 1 is a configuration diagram of a cutting device using laser according to the preferred embodiment of the present invention.
FIG. 2 is a block diagram of the cutting device using laser illustrated in FIG. 1.
FIGS. 3 and 4 are diagrams illustrating configurations of a separation unit, respectively.
FIGS. 5 to 7 are diagrams illustrating arrangement structures of a cooling unit and a laser generation unit, respectively.
FIG. 8 is a flowchart for explaining a cutting method using laser step by step according to the preferred embodiment of the present invention.

### [Best Mode]

Hereinafter, a cutting device and a cutting method using laser according to the preferred embodiment of the present invention will be described in detail with reference to the accompanying drawings.

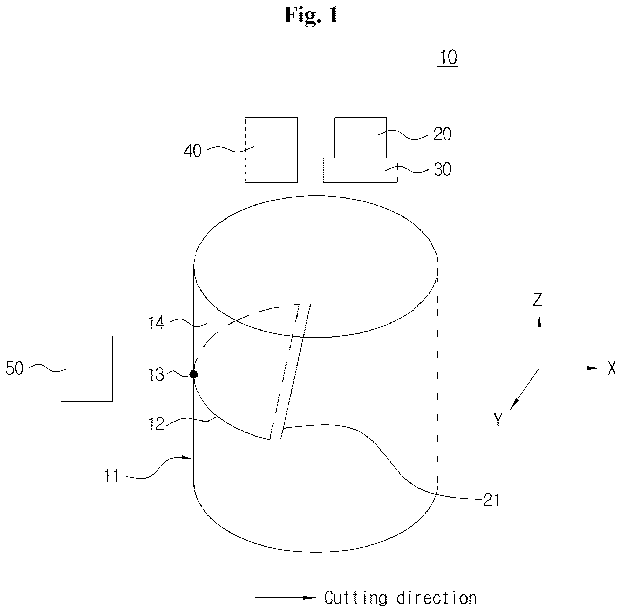

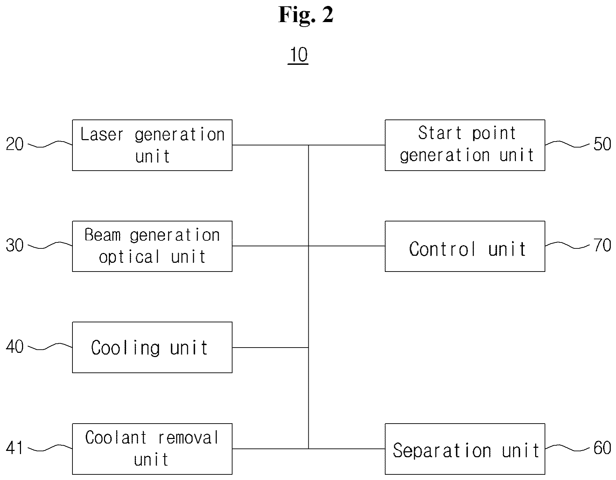

FIG. 1 is a configuration diagram of a cutting device using laser according to the preferred embodiment of the present invention, and FIG. 2 is a block diagram of the cutting device using laser illustrated in FIG. 1.

Hereinafter, terms indicating directions such as "left", "right", "front", "rear", "upward", and "downward" are defined to indicate respective directions based on a state illustrated in each drawings.

The present embodiment describes a configuration of a cutting device that cuts an ingot with a preset thickness through slicing to process a wafer.

Obviously, it should be noted that the present invention is not necessarily limited thereto, and may be applied not only to a cutting device that cuts the ingot to process the wafer, but also to a cutting device that cuts a workpiece having a hot brittleness, such as glass or ceramic.

In addition, the present invention may be applied not only to a silicon wafer, but also to a cutting device that cuts a high-hardness and high-brittle material, such as a silicon carbide (hereinafter referred to as "SiC") wafer, a gallium nitride (hereinafter referred to as "GaN") wafer, or the like, having a higher hardness than the silicon wafer.

As illustrated in FIGS. 1 and 2, a cutting device 10 using laser according to the preferred embodiment of the present invention includes a laser generation unit 20 configured to generate a laser beam 21 that is transmitted through a surface of a workpiece 11 and absorbed into the workpiece 11, a beam generation optical unit 30 configured to focus the laser beam in a shape, which is parallel to the surface of the workpiece 11 and extends perpendicular to a cutting direction, with a depth at which the surface of the workpiece 11 is to be cut such that the laser beam has a temperature below a melting point for preventing a cutting surface 12 of the workpiece 11 from being melted, and causing internal stress to separate a cut part from the workpiece 11, and a start point generation unit 50 configured to generate damage to a cutting start point 13 at a perimeter of the cutting surface 12 that is to be cut from the workpiece 12. Accordingly, the workpiece is cut while reducing the damage without melting the workpiece.

In addition, the cutting device 10 using laser according to the preferred embodiment of the present invention may further include a cooling unit 40 configured to cool a cut part 14 heated by the laser beam 21 by supplying a coolant to the cut part 14, a separation unit 60 configured to separate the cut part 14 that is cut from the workpiece 11, and a control unit 70 configured to control an operation of each device.

The control unit 70 may control the workpiece 11, for example, a diameter of the ingot and a thickness of the workpiece, that is, a cutting depth based on an upper surface of the ingot, an intensity of the laser beam 21 irradiated from the laser generation unit 20, a cutting speed of cutting the ingot by moving the laser beam along a cutting direction, and an injection amount of the coolant injected from the cooling unit 30 and a cooling speed according to an injection speed.

For example, the control unit 70 may change the laser beam 21 to have various shapes and energy distributions according to the diameter and cutting depth of the ingot, the cutting speed, and the cooling speed, and may generate a control signal for automatically adjusting an output of the laser beam 21 in proportion to the cutting speed.

The laser generation unit 20 may be prepared as a beam generator that generates the laser beam 21, and the beam generation optical unit may be prepared as a lens unit that adjusts a focus of the laser beam 21 generated by the beam generator to correspond to the cutting depth and irradiates the workpiece 11 with the laser beam 21.

In general, the ingot is formed in a substantially circular shape, and may be cut through slicing by a laser beam 21 irradiated such that the focus is disposed at a preset thickness, that is, a preset cutting depth based on the upper surface of the ingot in a state where the ingot is erected in a vertical direction.

For example, when viewed in FIG. 1, the laser beam 21 irradiated to the workpiece 11 moves along an X-axis direction from damage generated at the cutting start point 13 located at the perimeter of the cutting surface 12. Accordingly, the laser beam 21 may cut the cut part 14 with a thickness corresponding to the cutting depth along a -Z-axis direction on an upper surface of the workpiece 11.

That is, the laser beam 21 may be a linear line beam extending along in an Y-axis direction such that the laser beam 21 is perpendicular to a cutting surface 12 parallel to the upper surface of the workpiece 11.

For example, the laser beam 21 may have a wavelength of about 1 x 10⁻³ µm to about 1 x 10⁻² µm and an energy density of about 1 x 10⁻² mW/mm² to about 1 x 10⁵ mW/mm² or greater as an output, and may travel at a speed of about 1 x 10⁻² mm/s to about 1 x 10⁴ mm/s.

In FIG. 1, a position of the laser beam 21 focused to cut the workpiece 11 may be slightly spaced apart from a cutting line that is actually cut at the cutting surface 12, that is, a right end when viewed in FIG. 1. This is because the workpiece 11 is cut at a position where the coolant is supplied after the laser beam 21 is irradiated, and thus a gap is generated between the position of the laser beam and the actual cutting line. The gap between the laser beam 21 and the cutting line may be narrowed as the intensity of the laser beam 21 becomes stronger, and may be widened as the intensity of the laser beam 21 becomes weaker.

As described above, according to the present embodiment, the laser generation unit 20 sets the output of the laser beam 21 such that the workpiece 11 is heated to a temperature, which is below a melting point for preventing the cutting surface 12 of the workpiece 11 from being melted until the workpiece 11 is recrystallized or melted by heating and causes an internal stress to separate the cut part 14 from the workpiece 11, and generates the laser beam 21 at the set output.

Therefore, the present invention may cut the workpiece heated by the laser beam by minimizing the damage without melting or vaporizing the workpiece.

To this end, the laser generation unit 20 may generate the laser beam 21 having a wavelength and intensity corresponding to the signal of the control unit 70, and the beam generation optical unit 30 may focus the laser beam 21 generated by the laser generation unit 20 to irradiate the laser beam 21 to a focal position corresponding to the cutting depth according to the control signal.

In this case, the laser beam 21 may be formed in a linear shape that is the same as or slightly longer than the diameter of the ingot. Obviously, the present invention is not necessarily limited thereto, and the laser beam 21 may be changed to various shapes such as a shape having a predetermined area or a predetermined thickness according to the control signal of the control unit. However, when a length of the laser beam 21 is smaller than the diameter of the ingot, the ingot may be cut by reciprocating the laser beam 21 multiple times.

That is, a surface of the workpiece 11 is heated by the transmitted laser beam 21, but the inside of the workpiece 11, particularly the cutting surface 12 corresponding to the focus of the laser beam 21, is heated to a higher temperature than the surface of the workpiece 11. In this case, an internal stress is generated in a part of the cutting surface 12 to separate the cut part 14 from the workpiece 11.

In addition, the beam generation optical unit 30 may further include a moving unit (not illustrated) configured to move the lens unit along the cutting direction. The moving unit may move the lens unit or the laser beam 21 by adjusting an angle according to the control signal of the control unit 70.

For example, the moving unit may include a driving motor that generates a driving force according to the control signal of the control unit 70 and a moving member that moves by receiving the driving force of the driving motor through a power transmission unit configured in various ways such as a gear, a pulley, a belt, and a chain.

Meanwhile, the cutting start point 13 at the perimeter of the cutting surface 12 that is to be cut from the workpiece 11 has minute damage generated such that the cut part 14 may be easily cut.

To this end, according to the present embodiment, the start point generation unit 50 configured to generate minute damage at the cutting start point 13 may be further provided.

For example, the start point generation unit 50 may generate initial damage using a diamond wheel (not illustrated), or may generate minute damage by irradiating the cutting start point 13 with a laser beam irradiated from a separate laser generator (not illustrated).

The start point generation unit 50 may rotate the diamond wheel by a driving module (not illustrated) driven according to the control signal of the control unit 70, or may generate damage of a preset size by driving the laser generator to irradiate the cutting start point 13 with the laser beam.

The separation unit 60 serves to easily separate the cut part 14 that is cut from the workpiece 11 by moving the cut part 14 upward.

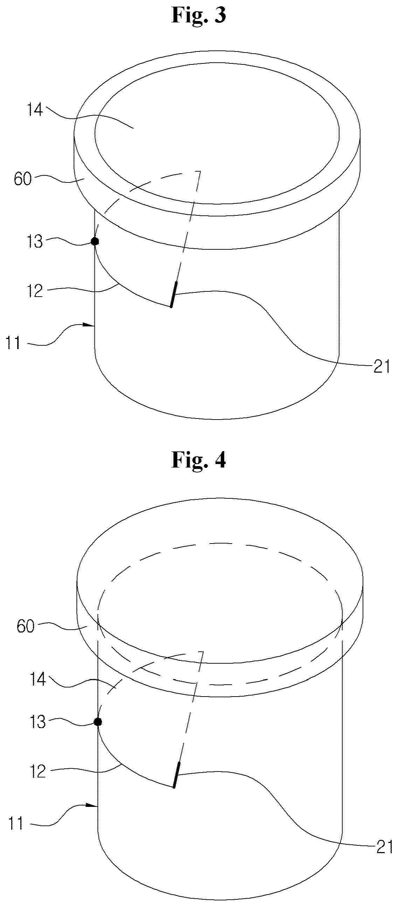

For example, FIGS. 3 and 4 are diagrams illustrating configurations of the separation unit, respectively.

As illustrated in FIG. 3, the separation unit 60 may be prepared as a perimeter support member formed in a substantially ring shape and fixed to a perimeter of the cut part 14 to separate the cut part from the workpiece 11 by moving the cut part upward by a tensile force provided from a tensile unit (not illustrated) .

In addition, as illustrated in FIG. 4, the separation unit 60 may be prepared as an upper close-contact support member formed in a substantially disc or cylindrical shape to make close-contact with an upper portion of the cut part 14, allow the laser beam 21 to be transmitted into the cut part 14, and separate the cut part 14 from the workpiece 11 by the tensile force in a state where the upper close-contact support member is attached to the cut part 14 using an adhesive or the like.

In this case, preferably, each of the upper close-contact support member and the adhesive may be formed of a light-transmitting material capable of transmitting all or most of the laser beam 21 toward the workpiece 11 without reflecting or scattering the laser beam 21.

In addition, the separation unit 60 may be prepared as a tensile force providing member including an upper jig (not illustrated) and a lower jig (not illustrated) for providing the tensile force to a lower end of the workpiece 11 and the cut part.

The cooling unit 40 may include an injection nozzle (not illustrated) for injecting the coolant to the surface of the workpiece 11 and a controller (not illustrated) for adjusting the cooling speed according to the injection amount and the injection speed of the coolant injected through the injection nozzle.

The injection nozzle may mix the coolant and a fluid for cooling an inside through the surface of the workpiece 11 irradiated with the laser beam 21 to inject the coolant mixed with the fluid at a preset pressure.

For example, the coolant may be injected toward an irradiation region to which the laser beam 21 is irradiated at the preset pressure by mixing water and air.

Therefore, a cooling region to which the coolant is injected may transmit the laser beam 21 up to the cutting depth.

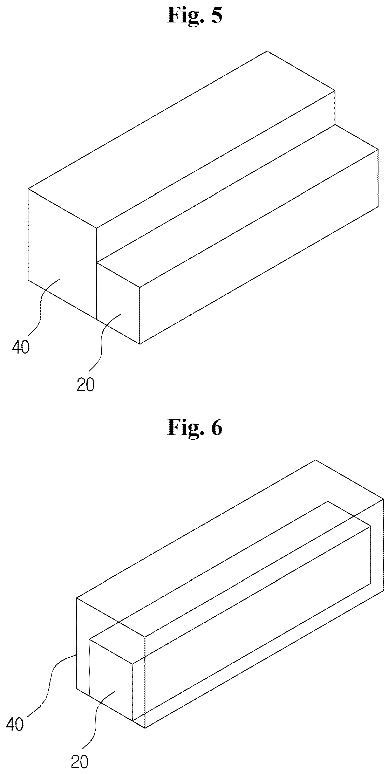

For example, FIGS. 5 to 7 are diagrams illustrating arrangement structures of the cooling unit and the laser generation unit, respectively.

As illustrated in FIG. 5, the cooling unit 40 may be disposed behind the laser generation unit 20 based on the cutting direction, that is, on the left side when viewed in FIG. 5.

Accordingly, the cooling unit 40 may cool the cut part 14 of the workpiece 11 by supplying the coolant to the heated cut part 14 of the workpiece 11 immediately after the laser beam 21 is irradiated from the laser generation unit 20 toward the workpiece 11.

As illustrated in FIG. 6, the cooling unit 40 may be configured to supply the coolant to the cooling region formed wider than the irradiation region to include the irradiation region to which the laser beam 21 is irradiated from the laser generation unit 20.

Accordingly, the cooling unit 40 may cool the cut part 14 of the workpiece 11 by supplying the coolant to the heated cut part 14 of the workpiece 11 after the laser beam 21 is irradiated from the laser generation unit 20 toward the workpiece 11.

Meanwhile, according to the present embodiment, a coolant removal unit 41 may be further included in order to solve a problem in which the coolant injected from the cooling unit 40 interferes with the laser beam 21 in a heated state or a vaporized state through heat exchange with the cut part 14.

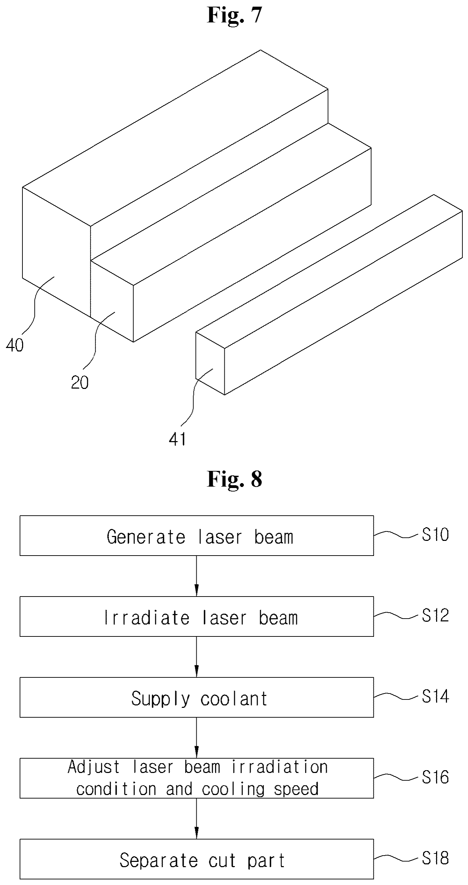

For example, as illustrated in FIG. 7, the coolant removal unit 41 may include a fan (not illustrated) disposed in front of the laser generation unit 20 in the cutting direction, that is, on the right side as viewed in FIG. 7, and may blow and remove the coolant heated or vaporized through heat exchange with the cut part 14.

As described above, the cooling region may be formed to cool the entire irradiation region to which the laser beam 21 is irradiated or partially cool the irradiation region.

Therefore, a depth at which the laser beam 21 is absorbed into the workpiece 11 may be changed depending on the cutting depth of the workpiece 11.

As described above, the present invention may cut the workpiece having heat brittleness with a desired thickness through slicing.

Next, a cutting method using laser according to the preferred embodiment of the present invention will be described in detail with reference to FIG. 8.

FIG. 8 is a flowchart for explaining the cutting method using laser step by step according to the preferred embodiment of the present invention.

In step S10 of FIG. 8, the laser generation unit 20 generates the laser beam 21 that is transmitted through the surface of the workpiece 11 and partially absorbed into the workpiece 11. In this case, minute damage may be generated at the cutting start point 13 outside the cutting surface 12 to be cut from the workpiece 11 by the start point generation unit 50.

In step S12, the beam generation optical unit 30 focuses and irradiates the laser beam in a shape, which is parallel to the surface of the workpiece 11 and extends perpendicular to a cutting direction, with a depth at which the surface of the workpiece 11 is to be cut such that the laser beam has a temperature below a melting point for preventing the cutting surface 12 of the workpiece 11 from being melted, and causing internal stress to separate the cut part from the workpiece 11.

Thus, the workpiece 11 may be cut in a state where the cutting surface 12 is not melted as the inside thereof is heated by the irradiated laser beam 21.

In step S14, the cooling unit 40 cools the surface of the workpiece 11 heated by the laser beam 21.

In this case, the cooling unit 40 may cool the cut part 14 of the workpiece 11 by supplying the coolant to the heated cut part 14 of the workpiece 11 immediately after the laser beam 21 is irradiated from the laser generation unit 20 toward the workpiece 11.

Alternately, the cooling unit 40 may cool the cut part 14 of the workpiece 11 by entirely or partially supplying the coolant to the heated cut part 14 of the workpiece 11 after the laser beam 21 is irradiated from the laser generation unit 20 toward the workpiece 11.

In addition, the coolant removal unit 41 may prevent interference between the coolant and the laser beam 21 by blowing and removing the coolant heated or vaporized through heat exchange with the cut part 14 by driving the fan.

As described above, while the workpiece 11 is being heated, cooled, and cut by irradiating the laser beam 21, the control unit 70 controls the diameter and cutting depth of the workpiece 11, the intensity of the laser beam 21 irradiated from the laser generation unit 20, the cutting speed at which the workpiece 11 is cut by moving the laser beam 21 along the cutting direction, and the injection amount at which the cooling unit 40 injects the coolant and the cooling speed according to the injection speed in real time (S16).

In step S18, the separation unit 60 separates the workpiece 11 by moving a cut part 14 that is cut from the workpiece 11 upward by using the tensile force provided from the tensile unit.

Through the process as described above, the present invention may cut the workpiece having heat brittleness with a desired thickness through slicing.

In addition, according to the present invention, the workpiece may be heated by irradiating the laser beam to the workpiece and cooled at the same time, so that the workpiece may be cut while minimizing damage without melting or vaporizing the workpiece.

In addition, according to the present invention, the cut part that is cut from the workpiece may be easily separated using the separation unit, and flatness of the cutting surface may be improved.

Accordingly, the present invention may improve workability of a cutting operation of the cut part on the workpiece, and may maximize productivity by removing or minimizing post-processing of the cut part, for example, a polishing process performed during wafer manufacturing.

Although the present invention invented by the present inventor has been described in detail with reference to the embodiments, the present invention is not limited to the above embodiments, and various modifications are possible without departing from the scope and spirit of the present invention.

### Industrial Applicability

The present invention is applied to a cutting device and method using laser to cut a workpiece having hot brittleness with a desired thickness through slicing.

## Claims

1. A cutting device using laser, the cutting device comprising:
a laser generation unit (20) configured to generate a laser beam that is transmitted through a surface of a workpiece (11) and partially absorbed into the workpiece (11);
a beam generation optical unit (30) configured to focus the laser beam in a shape, which is parallel to the surface of the workpiece (11) and extends perpendicular to a cutting direction, with a depth at which the surface of the workpiece (11) is to be cut such that the laser beam has a temperature below a melting point for preventing a cutting surface (12) of the workpiece (11) from being melted, and causing internal stress to separate a cut part from the workpiece (11);
a start point generation unit (50) configured to generate damage to a cutting start point (13) at a perimeter of the cutting surface (12) that is to be cut from the workpiece (11); and
a separation unit (60) configured to separate the cut part from the workpiece (11),
wherein the separation unit (60) is prepared as one of:
a perimeter support member fixed to a perimeter of the cut part to separate the cut part from the workpiece (11) by a tensile force provided from a tensile unit;
an upper close-contact support member configured to make close-contact with an upper portion of the cut part, allow the laser beam to be transmitted into the cut part, and separate the cut part from the workpiece (11) by the tensile force; and
a tensile force providing unit configured to provide the tensile force to a lower end of the workpiece (11) and the cut part,
wherein the workpiece is cut with a desired thickness through slicing while reducing damage without melting the workpiece, and
wherein the separation unit (60) is used to separate the cut part that is cut from the workpiece (11) by moving the cut part upward.

2. The cutting device of claim 1, further comprising a cooling unit (40) configured to cool the cut part of the workpiece (11) by supplying a coolant to the heated cut part of the workpiece (11) immediately after the laser beam is irradiated from the laser generation unit (20) toward the workpiece (11).

3. The cutting device of claim 1, further comprising:
a cooling unit (40) configured to cool the cut part of the workpiece (11) by supplying a coolant to the heated cut part of the workpiece (11) after the laser beam is irradiated from the laser generation unit (20) toward the workpiece (11); and
a coolant removal unit (41) configured to remove the coolant to prevent interference between the laser beam and a coolant heated or vaporized through heat exchange with the cut part.

4. The cutting device of claim 2 or 3, further comprising a control unit (70) configured to control operations of the laser generation unit (20), the beam generation optical unit (30), and the cooling unit (40),
wherein the control unit (70) generates a control signal for controlling a diameter and a cutting depth of the workpiece (11), an intensity of the laser beam irradiated from the laser generation unit (20), a cutting speed for cutting the workpiece (11) by moving the laser beam along the cutting direction, an injection amount of the coolant injected from the cooling unit (40), and a cooling speed according to an injection speed.

5. A cutting method using laser, the cutting method comprising:
(a) generating, by a laser generation unit (20), a laser beam that is transmitted through a surface of a workpiece (11) and partially absorbed into the workpiece (11);
(b) generating damage to a cutting start point (13) at a perimeter of a cutting surface that is to be cut from the workpiece (11) by using a start point generation unit (50); and
(c) focusing and irradiating, by a beam generation optical unit (30), the laser beam in a shape, which is parallel to the surface of the workpiece (11) and extends perpendicular to a cutting direction, with a depth at which the surface of the workpiece (11) is to be cut such that the laser beam has a temperature below a melting point for preventing a cutting surface (12) of the workpiece (11) from being melted, and causing internal stress to separate a cut part from the workpiece (11); and
(d) separating the cut part that is cut from the workpiece (11) by using a separation unit (60),
so that the workpiece (11) is cut with a desired thickness through slicing while reducing damage without melting the workpiece,
wherein the separation unit (60) is used to separate the cut part that is cut from the workpiece (11) by moving the cut part upward, in which the separation unit (60) is prepared as one of:
a perimeter support member fixed to a perimeter of the cut part to separate the cut part from the workpiece (11) by a tensile force provided from a tensile unit;
an upper close-contact support member configured to make close-contact with an upper portion of the cut part, allow the laser beam to be transmitted into the cut part, and separate the cut part from the workpiece (11) by the tensile force; and
a tensile force providing unit configured to provide the tensile force to a lower end of the workpiece (11) and the cut part.

6. The cutting method of claim 5, wherein, in step (c), the surface of the workpiece (11) heated by the laser beam is cooled using the cooling unit (40), and
the cooling unit (40) cools the cut part of the workpiece (11) by supplying a coolant to the heated cut part of the workpiece (11) immediately after the laser beam is irradiated from the laser generation unit (20) toward the workpiece (11).

7. The cutting method of claim 5, wherein, in step (c), the surface of the workpiece (11) heated by the laser beam is cooled by using the cooling unit (40),
the coolant heated or vaporized through heat exchange with the cut part is removed using a coolant removal unit (41) to prevent interference between the laser beam and the coolant, and
the cooling unit (40) cools the cut part of the workpiece (11) by supplying the coolant to the heated cut part of the workpiece (11) after the laser beam is irradiated from the laser generation unit (20) toward the workpiece (11).

8. The cutting method of claim 6 or 7, wherein, in step (c), the control unit (70) is used to control a diameter and a cutting depth of the workpiece (11), an intensity of the laser beam irradiated from the laser generation unit (20), a cutting speed for cutting the workpiece (11) by moving the laser beam along the cutting direction, an injection amount of the coolant injected from the cooling unit (40), and a cooling speed according to an injection speed.
